# EUROPEAN PATENT APPLICATION

(11) **EP 4 036 451 A1**
(43) Date of publication of application: **03.08.2022**
(21) Application number: 20867931.6
(22) Date of filing: 12.05.2020
(51) Int. Cl.: F16L 55/00

(54) **ANTI-BACKFLOW ANTI-SIPHON MODULE**

(30) Priority: 29.09.2019 CN 201910935067
(71) Applicant: Bestter (Xiamen) Technology Inc., Xiamen, Fujian 361000 (CN)
(72) Inventor: GONG, Binhua, Xiamen, Fujian 361000 (CN); CAI, Mingjian, Xiamen, Fujian 361000 (CN); LI, Guotong, Xiamen, Fujian 361000 (CN); HE, Xiyuan, Xiamen, Fujian 361000 (CN); FENG, Yuanfei, Xiamen, Fujian 361000 (CN)
(74) Representative: Verscht, Thomas Kurt Albert
(86) International application number: PCT/CN2020/089695
(87) International publication number: WO 2021/057034

(57) **Abstract**

An anti-backflow anti-siphon module, comprising a half-open shell (1), the half-open shell (1) being provided with a water intake path (2) and a water outlet path (3), the water intake path (2) and the water outlet path (3) being positioned on opposite holes, and a partition space being provided between an outlet of the water intake path (2) and an inlet of the water outlet path (3), the partition medium being air. When backflow or siphon occurs in the water outlet path (3), the backflow water enters the partition space and drains outward, and cannot reach the water intake path (2), thereby achieving an anti-backflow and anti-siphon objective.

## Description

### FIELD OF THE DISCLOSURE

The present disclosure relates to a backflow prevention and anti-siphon device in a waterway.

### BACKGROUND OF THE DISCLOSURE

Fluid supply pipelines, for example, when the water pipeline is cut off, negative pressure is formed in the pipeline, and water in the water tank will flow back into the water pipeline through a water outlet passage, causing pollution for the water in the water pipeline. The existing backflow prevention and anti-siphon modules on the market generally adopt a method using a physical partition between inflow water and outflow water, and a rubber pad is additionally equipped, when water flows, it is hermetically sealed, when it is used for backflow and anti-siphon, it is open to break a vacuum (or the negative pressure) of the pipeline so as to achieve backflow prevention. However, the existing modules have the following deficiencies: a water inlet and a water outlet are loaded on a same half-closed cavity, residual water easily pollute the water inlet and then pollute a water supply pipeline. Further, it requires a combination of multiple parts and easily fails due to assembly and blockage by foreign material.

### BRIEF SUMMARY OF THE DISCLOSURE

An objective of the present disclosure is to solve the deficiencies in existing techniques, provide a backflow prevention and anti-siphon module, and solve the problems of poor physical partition effects and multiple parts in the background.

In order to solve the technical problem, a technical solution of the present disclosure is as follows.

A backflow prevention and anti-siphon module comprises a half-open housing, the half-open housing comprises a water inlet passage and a water outlet passage, the water inlet passage and the water outlet passage are located at opposite hole positions, and a partition space is disposed between an outlet of the water inlet passage and an inlet of the water outlet passage, and a partition medium is air.

In a preferred embodiment of the present disclosure, a size of a cross-sectional area of the water inlet passage gradually decreases from an inlet to the outlet.

In a preferred embodiment of the present disclosure, one end of the water outlet passage adjacent to the inlet thereof comprises a constricted neck section, a size of a cross-sectional area of the constricted neck section is smaller than a size of an outlet of the water outlet passage, and an inner side of the cross-sectional area of the constricted neck section and a cavity of the water outlet passage is enlarged.

In a preferred embodiment of the present disclosure, the inlet of the water outlet passage defines a funnel shape.

In a preferred embodiment of the present disclosure, a plurality of water baffle sheets are disposed in the half-open housing, and the water baffle sheets are disposed on two sides of the partition space for blocking backflow water from the water outlet passage and for avoiding splashing in an invalid state.

In a preferred embodiment of the present disclosure, the water baffle sheets bend to form a water baffle surface, and the water baffle surface obliquely faces the water outlet passage.

In a preferred embodiment of the present disclosure, the half-open housing comprises a bottom opening.

In a preferred embodiment of the present disclosure, the half-open housing comprises an air hole.

Compared with the existing techniques, the technical solution has the following advantages.
1. An air partition is disposed between the water inlet passage and the water outlet passage and is in communication with the atmosphere. The water flowing back from the water outlet passage due to the siphon will directly fall to be discharged from a bottom of the device without flowing back into the water inlet passage;
2. A diameter of the outlet of the water outlet passage is large, and when there is no sufficient pressure, backflow water cannot form sufficient spray distance for polluting a water inlet and will directly fall to be discharged from the bottom;
3. The cross-sectional area of the water inlet passage gradually narrows inward, and an outlet of a tail end can form an effective water jet for jetting into the water outlet passage to reach a rear device even at a low pressure.

### BRIEF DESCRIPTION OF THE DRAWINGS

FIG. 1 illustrates a first structural view of the present disclosure.
FIG. 2 illustrates a second structural view of the present disclosure.
FIG. 3 illustrates a bottom view of the present disclosure.
FIG. 4 illustrates a cross-sectional view of the present disclosure.

Therein, half-open housing 1, water inlet passage 2, first inlet section 21, first transition section 22, first outlet section 23, water outlet passage 3, constricted neck section 31, water baffle sheets 4, water baffle surface 41, air hole 5, cavity 6, and an arrow represents a direction of water flow.

### DETAILED DESCRIPTION OF THE EMBODIMENTS

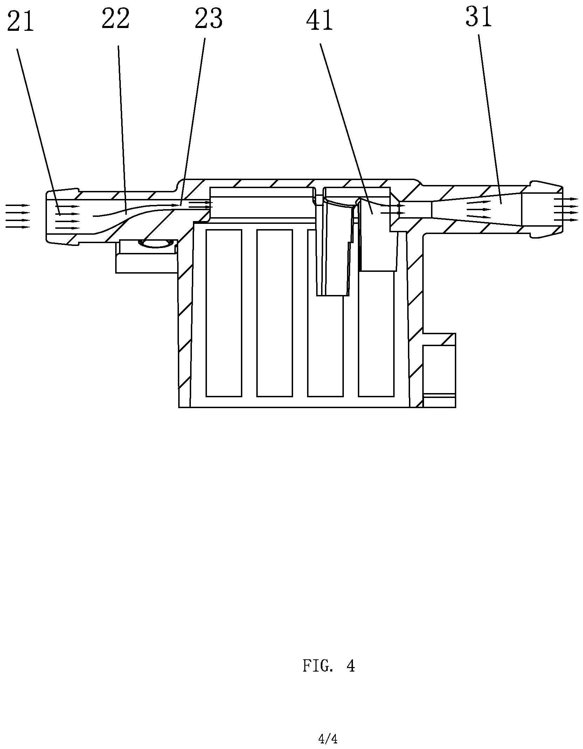

In the present disclosure, FIG. 4 is used as a standard for an upper portion and a lower portion of a mentioned position and a direction of water flow.

### Embodiment 1

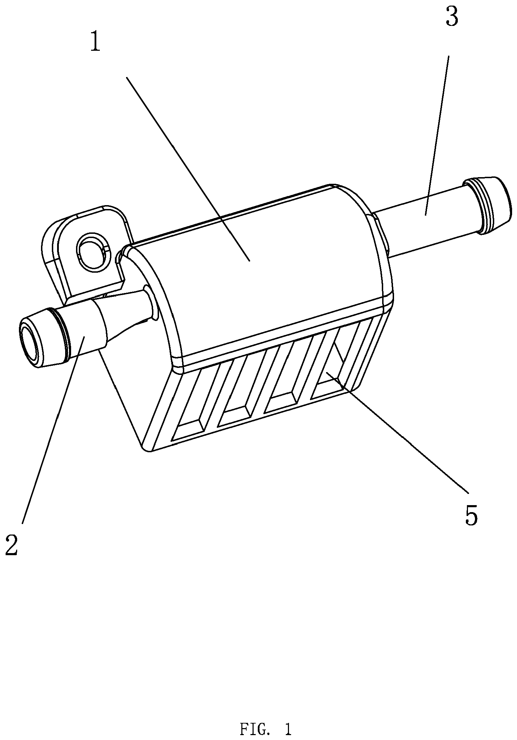

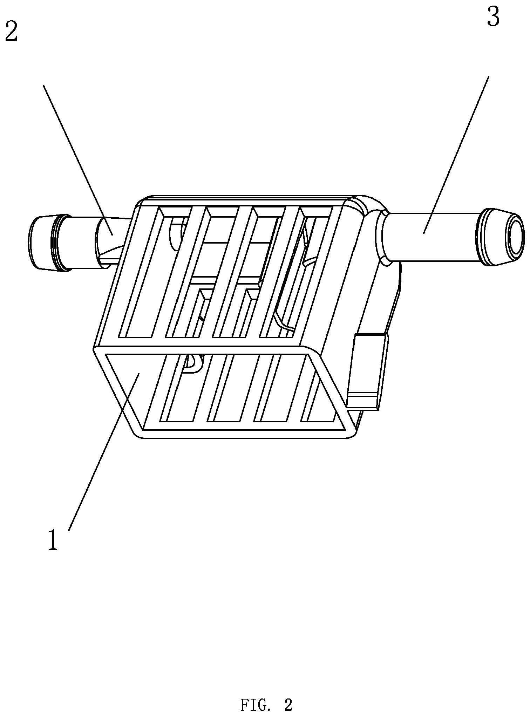

Referring to FIGS. 1-3, a backflow prevention and anti-siphon module of this embodiment comprises a housing; in this embodiment, the housing is a half-open housing (1) with an upper arched roof, a lower rectangular body and a bottom opening. In this embodiment, the half-open housing comprises an air hole (5).

The half-open housing (1) comprises a water inlet passage (2) and a water outlet passage (3) respectively connected to a front flow passage and a rear flow passage, and the water inlet passage (2) and the water outlet passage (3) are located at opposite hole positions. Preferably, the water inlet passage (2) and the water outlet passage (3) are substantially disposed along a same straight line, and a partition space is disposed between an outlet of the water inlet passage (2) and an inlet of the water outlet passage (3), a partition medium is air, and the partition space is as follows: when water is in a static state, the partition space comprises an opening in communication with the atmosphere. In this embodiment, the water inlet passage (2) and the water outlet passage (3) are disposed on an upper portion of the half-open housing, and water that does not flow through the water outlet passage will directly fall to be discharged from a bottom without flowing back into the water inlet passage.

In order to ensure that an effective water jet can be formed even at a low pressure, a size of a cross-sectional area of the water inlet passage (2) gradually decreases in a direction from an inlet to the outlet. In this embodiment, referring to FIG. 4, the water inlet passage (2) comprises a first inlet section (21), a first transition section (22) and a first outlet section (23) connected in sequence from the inlet to the outlet. A cross-sectional area of the first transition section (22) narrows in a slope, a cross-sectional area of a cavity gradually decreases to increase a velocity and a pressure of the water, and the water jet configured to reach the water outlet passage is formed at the first outlet section (23).

In this embodiment, the inlet of the water outlet passage (3) defines a funnel shape for receiving the water jet from the water inlet passage in convenience. In addition, an end of the water outlet passage (3) adjacent to the inlet thereof comprises a constricted neck section (31) (i.e., a tail end of the funnel shape), and a size of a cross-sectional area of the constricted neck section is smaller than a size of a cross-sectional area of an outlet of the water outlet passage. At the same time, an inner side of the cross-sectional area of the constricted neck section and a cross-sectional area of the water outlet passage is enlarged. After the water flows through the constricted neck section (31), a diameter of a cavity increases. On one hand, when there is no sufficient pressure, backflow water cannot form sufficient jet distance for polluting a water inlet and will directly fall to be discharged from a bottom. On the other hand, an enlarged outlet is not easily hermetically closed to further limit a formation of siphon and prevent a formation of the backflow water at a certain extent.

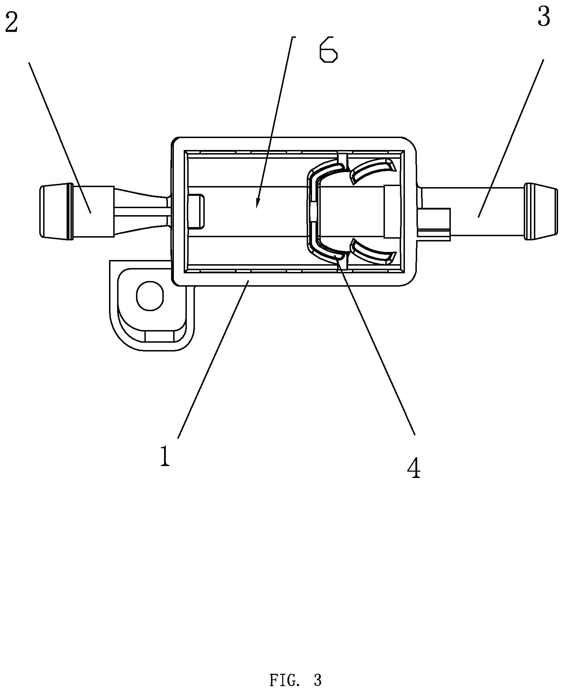

A plurality of water baffle sheets (4) are disposed in the half-open housing, and the water baffle sheets (4) are disposed on two sides of a passage of the partition space and used to block the backflow water from the water outlet passage. In this embodiment, the water baffle sheets define an axially symmetrical form, referring to FIG. 3, the water baffle sheets (4) have a tendency to hold one anther. In addition, each of the water baffle sheets bends to form a water baffle surface (41), the water baffle surface obliquely faces the water outlet passage, and the water baffle surface (41) define a recess from two sides to a central axial portion. When a pressure in the water outlet passage changes suddenly, the backflow water is controlled from splashing out of the housing.

### Embodiment 2

Embodiment 2 differs from Embodiment 1 in that the half-open housing comprises two sets of the water inlet passage and the water outlet passage.

The aforementioned embodiments are merely some embodiments of the present disclosure, and the scope of the disclosure is not limited thereto. Thus, it is intended that the present disclosure cover any modifications and variations of the presently presented embodiments provided they are made without departing from the appended claims and the specification of the present disclosure.

### INDUSTRIAL APPLICABILITY

The present disclosure provides a backflow prevention and anti-siphon module, it comprises a half-open housing, the half-open housing comprises a water inlet passage and a water outlet passage, the water inlet passage and the water outlet passage are located at opposite hole positions, and a partition space is disposed between an outlet of the water inlet passage and an inlet of the water outlet passage, and a partition medium is air. When backflow or the siphon occurs in the water outlet passage, the backflow water flows into the partition space to be externally discharged and cannot reach the water inlet passage, so as to achieve an objective of backflow prevention and anti-siphon. The industrial applicability is good.

## Claims

1. A backflow prevention and anti-siphon module, **characterized in that**: it comprises a half-open housing, the half-open housing comprises a water inlet passage and a water outlet passage, the water inlet passage and the water outlet passage are located at opposite hole positions, and a partition space is disposed between an outlet of the water inlet passage and an inlet of the water outlet passage, and a partition medium is air.

2. The backflow prevention and anti-siphon module according to claim 1, **characterized in that**: a size of a cavity of the water inlet passage gradually decreases from an inlet to the outlet.

3. The backflow prevention and anti-siphon module according to claim 1, **characterized in that**: one end of the water outlet passage adjacent to the inlet thereof comprises a constricted neck section, and a size of a cross-sectional area of the constricted neck section is smaller than a size of an outlet of the water outlet passage.

4. The backflow prevention and anti-siphon module according to claim 1, **characterized in that**: the water inlet passage and the water outlet passage are substantially disposed along a same straight line.

5. The backflow prevention and anti-siphon module according to claim 3, **characterized in that**: the inlet of the water outlet passage defines a funnel shape.

6. The backflow prevention and anti-siphon module according to claim 1, **characterized in that**: a plurality of water baffle sheets are disposed in the half-open housing, and the water baffle sheets are disposed on two sides of the partition space for blocking backflow water from the water outlet passage.

7. The backflow prevention and anti-siphon module according to claim 6, **characterized in that**: the water baffle sheets bend to form a water baffle surface, and the water baffle surface obliquely faces the water outlet passage.

8. The backflow prevention and anti-siphon module according to claim 1, **characterized in that**: the half-open housing comprises a bottom opening.

9. The backflow prevention and anti-siphon module according to claim 1, **characterized in that**: the half-open housing comprises an air hole.

10. The backflow prevention and anti-siphon module according to claim 1, **characterized in that**: the half-open housing comprises at least one set of the water inlet passage and the water outlet passage.

11. A backflow prevention and anti-siphon device, **characterized in that**: it is arranged in a waterway, it comprises a water inlet passage and a water outlet passage, the water inlet passage and the water outlet passage are substantially disposed along a same straight line, and an opening in communication with the atmosphere is disposed between the water inlet passage and the water outlet passage.

12. The backflow prevention and anti-siphon device according to claim 11, **characterized in that**: the opening is disposed on a bottom of water flow.

13. A backflow prevention and anti-siphon device, **characterized in that**: it comprises a water inlet passage and a water outlet passage, the water inlet passage and the water outlet passage are substantially disposed along a same straight line, a cavity is disposed between the water inlet passage and the water outlet passage, and the cavity comprises an opening in communication with the atmosphere at a lower portion, a side portion or an upper portion of a water passage.

14. The backflow prevention and anti-siphon device according to claim 13, **characterized in that**: a size of a cross-sectional area of the water inlet passage gradually decreases in a direction from an inlet to an outlet.

15. The backflow prevention and anti-siphon mold device according to claim 13, **characterized in that**: one end of the water outlet passage adjacent to an inlet thereof comprises a constricted neck section, and a size of a cross-sectional area of the constricted neck section is smaller than a size of an outlet of the water outlet passage.

16. The backflow prevention and anti-siphon device according to claim 13, **characterized in that**: a plurality of water baffle sheets is disposed in the cavity, and the water baffle sheets are disposed on two sides of the water passage for blocking backflow water from the water outlet passage.

17. The backflow prevention and anti-siphon device according to claim 17, **characterized in that**: the water baffle sheets bend to form a water baffle surface, and the water baffle surface obliquely faces the water outlet passage.
